# EUROPÄISCHE PATENTSCHRIFT

(11) **EP 3 938 172 B1**
(45) Veröffentlichungstag und Bekanntmachung des Hinweises auf die Patenterteilung: **10.06.2026**
(21) Anmeldenummer: 20712260.7
(22) Anmeldetag: 12.03.2020
(51) Int. Cl.: B29C 63/00, B29C 63/02, B29C 63/04, B29C 33/38, B29D 11/00, G02C 7/00, B29L 11/00, B29L 31/00, B29C 63/48

(54) **VERFAHREN UND VORRICHTUNG ZUM ANBRINGEN EINES MATERIALS AUF EINEM TRÄGER**
METHOD AND DEVICE FOR APPLYING A MATERIAL ON A CARRIER
PROCÉDÉ ET DISPOSITIF POUR APPLIQUER UN MATÉRIAU SUR UN SUPPORT

(30) Priorität: 14.03.2019 DE 102019106505
(43) Veröffentlichungstag der Anmeldung: 19.01.2022
(73) Patentinhaber: Carl Zeiss Jena GmbH, 07745 Jena (DE)
(72) Erfinder: LÜTZ, Andreas, 07774 Dornburg-Camburg (DE); PESCH, Alexander, 07743 Jena (DE); THOMAE, Daniel, 07745 Jena (DE); RIETHMÜLLER, Mirko, 04157 Leipzig (DE)
(74) Vertreter: Kraus & Lederer PartGmbB
(86) Internationale Anmeldenummer: PCT/EP2020/056624
(87) Internationale Veröffentlichungsnummer: WO 2020/182934

(56) Entgegenhaltungen:
- WO-A1-00/21734
- JP-B1- 6 416 351
- US-A- 5 000 805

## Beschreibung

Die vorliegende Anmeldung betrifft Verfahren und Vorrichtungen zum Anbringen eines fotosensitiven Materials auf einem Träger, in welches optische Strukturen, nämlich Hologramme und/oder Gitter, geschrieben werden.

Für verschiedene Anwendungen in der Optik muss ein Material, beispielsweise eine Folie, auf einem transparenten Träger angebracht werden. Ein Beispiel sind Folien aus einem fotosensitiven Material, in welches holographische Strukturen geschrieben wurden. Diese Folien werden dann auf transparenten Trägern angebracht. Derartige transparente Träger können beispielsweise Brillengläser sein, und die holographischen Strukturen werden zur Dateneinspiegelung verwendet. Bei anderen derartigen Anwendungen können Träger Windschutzscheiben für Kraftfahrzeuge sein. Auch hier können die holographischen Strukturen beispielsweise zur Dateneinspiegelung verwendet werden. Bei anderen Anwendungen werden reflektierende Träger, z. B. Parabolspiegel, oder nicht-transparente Träger, wie z. B. Armaturen in einem Kraftfahrzeug, verwendet.

In solchen Fällen muss die Folie häufig auf eine gekrümmte Oberfläche des Trägers angebracht werden. Folien können jedoch in der Regel nur in eine Richtung problemlos gekrümmt werden, sodass nur eine zylindrische Form oder Kegelform problemlos knickfrei möglich sind.

Die JP 6 415351 B1 offenbart ein Verfahren zum Aufbringen einer Folie auf ein Flüssigkeitskristalldisplay, wobei die Folie hierzu auf einem flachen porösen Träger angebracht und mit Unterdruck angesaugt wird.

Die WO 00/21 734 A1 und die US 5 000 805 A offenbaren jeweils Vorrichtungen und Verfahren, bei welchen eine Folie mittel Unterdruck auf einem Fahrzeugsitz angebracht wird.

Es ist daher eine Aufgabe der vorliegenden Erfindung, Verfahren und Vorrichtungen bereitzustellen, die ein Anbringen eines fotosensitiven Materials auf einem Träger, insbesondere auch bei gekrümmten Oberflächen des Trägers, erleichtern.

Es wird ein Verfahren nach Anspruch 1 sowie eine Vorrichtung nach Anspruch 13 bereitgestellt. Die Unteransprüche definieren weitere Ausführungsbeispiele.

Durch die Verwendung eines Luftlagers mit einer zu dem Träger komplementären Form (d.h. im Wesentlichen einer Negativform) kann das anzubringende Material in eine passende Form gebracht werden und/oder ein Ablösen des Trägers mit dem daran angebrachten Material erleichtert werden. Durch die Verwendung des porösen Materials ist dabei eine genaue Anpassung an die Form des Trägers bei gleichzeitiger Bereitstellung einer Vielzahl von Luftauslässen möglich.

Das Luftlager kann in Bezug auf den Träger vollaperturig sein, sodass eine Oberfläche des Luftlagers mindestens so groß ist wie eine Oberfläche des Trägers, auf der das Material angebracht wird, oder auch nur partiell bzw. subaperturig, womit z. B. das Material nur auf einen Teil der Oberfläche des Trägers angebracht wird.

Durch das Beaufschlagen mit Überdruck kann ein Ablösen des Trägers mit dem darauf angebrachten Material erleichtert werden.

Zu bemerken ist, dass der Begriff "Luftlager" hier allgemein zu verstehen ist und die Verwendung anderer Gase als Luft mit einschließt. Beispielsweise können bei manchen Ausführungsbeispielen Inertgase verwendet werden oder besonders gereinigte Gase verwendet werden, wenn dies für eine jeweilige Anwendung notwendig oder hilfreich ist.

Das Material kann eine Folie umfassen. Dann kann das Verfahren zudem ein Aufbringen eines Klebemittels auf die Folie vor dem Anordnen des Trägers auf dem Material umfassen.

Unter Folien sind dabei allgemein dünne Materialien zu verstehen, welche biegbar sind und somit mittels des dargestellten Verfahrens auf die entsprechende Form gebracht werden können. Solche Folien können aus Kunststoff gefertigt sein, können aber auch andere dünne Substratmaterialien, wie dünne Glassubstrate, sein.

Der Begriff "Folie" schließt auch die Verwendung von Folien-Stacks oder von Stapeln aus mehreren bereits verbundenen Folien mit ggf. unterschiedlichen Funktionen ein.

Alternativ kann das Material auch ein flüssiges Material umfassen.

Dabei kann das Verfahren ein Verschließen eines Luftanschlusses der Luftlageranordnung bei dem Platzieren des Materials auf der Oberfläche der porösen Schicht und beim Anordnen des Trägers umfassen. Hierdurch kann ein Eindringen des Materials in die poröse Schicht verringert werden.

Das Verfahren kann weiter eine Wärmebehandlung des auf der Oberfläche der porösen Schicht platzierten Materials umfassen.

Durch die Wärmebehandlung kann eine Anpassung des Materials an die Form des Luftlagers und somit an die Form des Trägers verbessert werden.

Durch die Belichtung werden holographische Strukturen in dem Material ausgebildet werden. Dadurch, dass dies geschieht, nachdem das Material durch das Luftlager in die passende Form gebracht wurde, kann sichergestellt werden, dass die Belichtung passend zu der endgültigen Form des Materials auf dem Träger ist.

Das Material kann sich während des Behandelns auf der Oberfläche der porösen Schicht befinden.

Alternativ kann das Material während des Behandelns mit dem Träger verbunden sein und von der porösen Schicht entfernt sein.

Das Verfahren kann weiter ein Entfernen von überschüssigem Material von dem Träger umfassen.

Das Verfahren kann weiter ein Anbringen eines weiteren Trägers auf dem Material auf einer dem Träger abgewandten Seite umfassen, sodass optische Komponenten mit eingebettetem Material hergestellt werden können.

Der Träger kann ein transparenter Träger sein, beispielsweise aus Glas, transparentem Kunststoff oder einem anderen bei der Herstellung von optischen Komponenten gebräuchlichen Werkstoff.

Das Material kann ein optisches Material oder ein optisches Element umfassen. Beispiele umfassen transparente Materialien oder Materialien mit optischen Strukturen, beispielsweise Folien mit diffraktiven oder refraktiven Strukturen, z. B. Hologramme.

Das Verfahren kann somit zum Herstellen einer optischen Komponente dienen.

Der Träger und/oder das Material können eine Glasplatte umfassen.

Das Verfahren kann weiter umfassen:
Platzieren des Trägers auf einer Oberfläche einer weiteren porösen Schicht einer weiteren Luftlageranordnung, wobei die Oberfläche der weiteren porösen Schicht entsprechend einer gewünschten Oberfläche des Trägers, auf der das Material anzubringen ist, ausgestaltet ist, und
Beaufschlagen der weiteren Luftlageranordnung mit Unterdruck zum Ansaugen des Trägers, bevor der Träger auf dem Material angeordnet wird.

Auf diese Weise kann auch der Träger in eine gewünschte Form gebracht werden, was beispielsweise zum Verbinden zweier Glasplatten dienen kann.

Bei der Vorrichtung kann die Oberfläche der porösen Schicht eine gekrümmte Form aufweisen. Die Krümmung kann dabei in eine oder mehrere Raumrichtungen vorliegen (ein- oder mehrdimensionale Krümmung). Die Krümmung kann rotationssymmetrisch sein, kann aber auch als sogenannte Freiform vorliegen.

Die Vorrichtung kann weiter eine Heizeinrichtung umfassen, welche zum Erwärmen eines auf der Oberfläche der porösen Schicht befindlichen Materials angeordnet ist.

Die Vorrichtung kann weiter eine Halterung zum Halten des Materials an einem Rand der Oberfläche des porösen Materials umfassen.

Die Vorrichtung kann weiter eine Schneideinrichtung zum Entfernen von überschüssigem Material von dem Träger umfassen.

Die Oberfläche der porösen Schicht kann eine Beschichtung aufweisen, um so die Eigenschaften der porösen Schicht zu modifizieren.

Die Beschichtung kann dabei Öffnungen mit einem Durchmesser aufweisen, der kleiner ist als ein mittlerer Durchmesser von Poren in der Oberfläche der porösen Schicht. So kann eine gewünschte Größe von Luftein-/auslässen eingestellt werden.

Die Oberfläche der porösen Schicht kann eine Abweichung von einer der Oberfläche des Trägers entsprechenden Soll-Form von weniger als 100 µm, bevorzugt weniger als 50 µm, beispielsweise 100 µm oder weniger aufweisen. Dies ermöglicht die Fertigung optischer Komponenten, bei denen es auf hohe Präzision ankommt.

Die Vorrichtung kann weiter umfassen:
eine weitere Luftlageranordnung mit einer auf einem weiteren Luftlager angeordneten weiteren porösen Schicht, wobei die weitere poröse Schicht eine Oberfläche zum Aufnehmen des Trägers (50) aufweist. So kann bei flexiblen oder formbaren Trägern eine gewünschte Form des Trägers sichergestellt werden.

Die Vorrichtung ist zur Durchführung eines der oben beschriebenen Verfahren eingerichtet.

Die Erfindung wird im Folgenden unter Bezugnahme auf die beigefügten Zeichnungen anhand von Ausführungsbeispielen näher erläutert. Es zeigen:
Fig. 1 ein Flussdiagramm zur Veranschaulichung eines Verfahrens gemäß einem Ausführungsbeispiel,
Fig. 2A bis 2F Darstellungen verschiedener Verfahrensschritte der Fig. 1 unter Benutzung einer erfindungsgemäßen Vorrichtung,
Fig. 3 ein Beispiel für eine mittels des Verfahrens der Fig. 1 hergestellten optischen Komponente,
Fig. 4A und 4B Diagramme zur Veranschaulichung einer Abwandlung des Verfahrens der Fig. 1 bei Verwendung eines flüssigen Materials unter Verwendung eines Ausführungsbeispiels der erfindungsgemäßen Vorrichtung, und
Fig. 5 eine Querschnittsansicht einer Vorrichtung gemäß einem Ausführungsbeispiel bei einer Abwandlung des Verfahrens der Fig. 1.
Fig. 6 eine Querschnittsansicht einer Vorrichtung gemäß einem weiteren Ausführungsbeispiel.
Fig. 7 ein Diagramm zur Veranschaulichung einer Problematik beim Verbinden zweier Glasplatte.
Fig. 8 und 9 Diagramme zur Veranschaulichung eines Verfahrens und einer Vorrichtung gemäß einem weiteren Ausführungsbeispiel.
Fig. 10A und 10B Beispiele von mittels des Verfahrens und der Vorrichtung der Fig. 8 und 9 hergestellten Baugruppen.

Nunmehr werden Ausführungsbeispiele detailliert erläutert. Diese Ausführungsbeispiele beziehen sich auf das Anbringen eines Materials auf einem Träger, insbesondere einem transparenten Träger mit einer gekrümmten Oberfläche. Zunächst wird ein Ausführungsbeispiel erläutert, bei dem das Material in Form einer Folie vorliegt. Später werden Abwandlungen dieses Ausführungsbeispiels erläutert, bei denen das Material auch in flüssiger Form vorliegen kann.

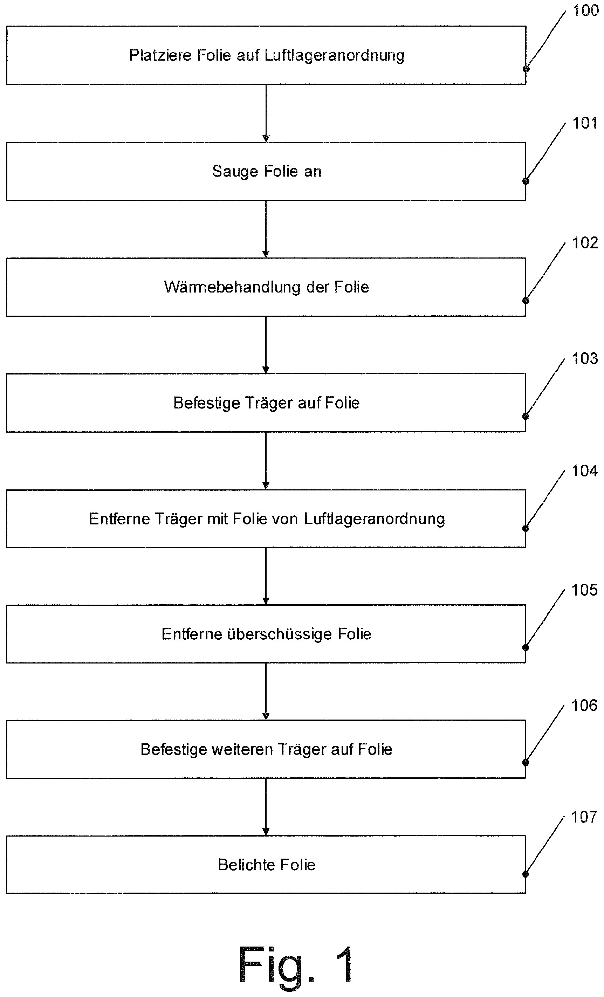

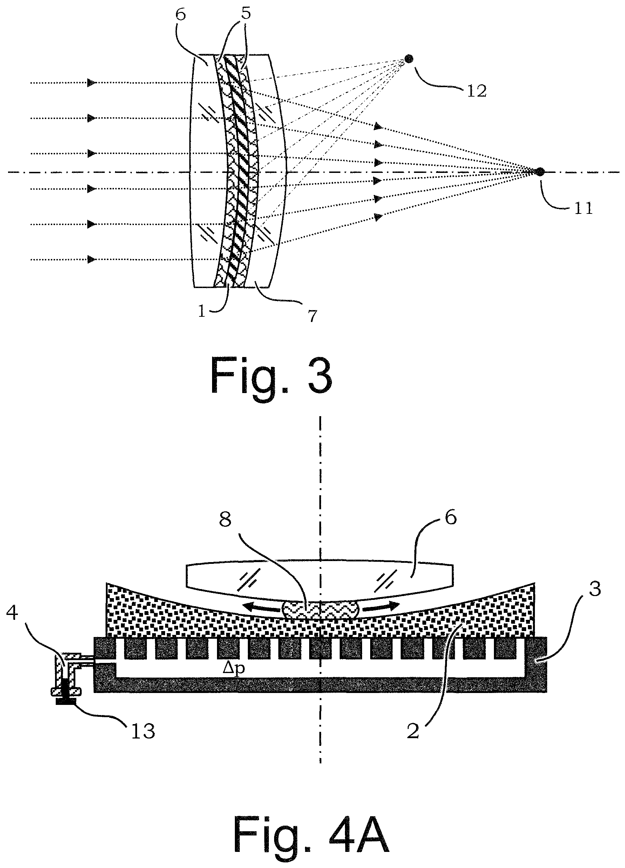

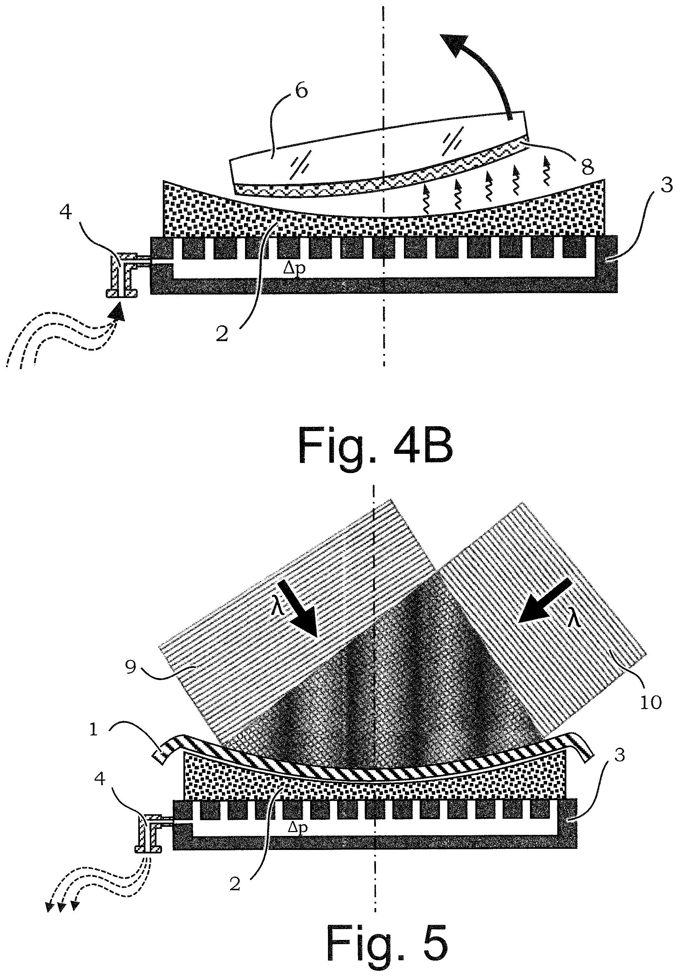

Fig. 1 zeigt ein Flussdiagramm zur Veranschaulichung eines Verfahrens gemäß einem Ausführungsbeispiel. Es ist zu bemerken, dass manche der dargestellten Verfahrensschritte auch weggelassen werden können, d.h. optional sind. Zudem müssen nicht alle Verfahrensschritte notwendigerweise in der dargestellten Reihenfolge durchgeführt werden. Manche dieser Abwandlungen und Modifikationen des Verfahrens der Fig. 1 werden später unter Bezugnahme auf die Fig. 4A, 4B und 5 auch noch näher erläutert.

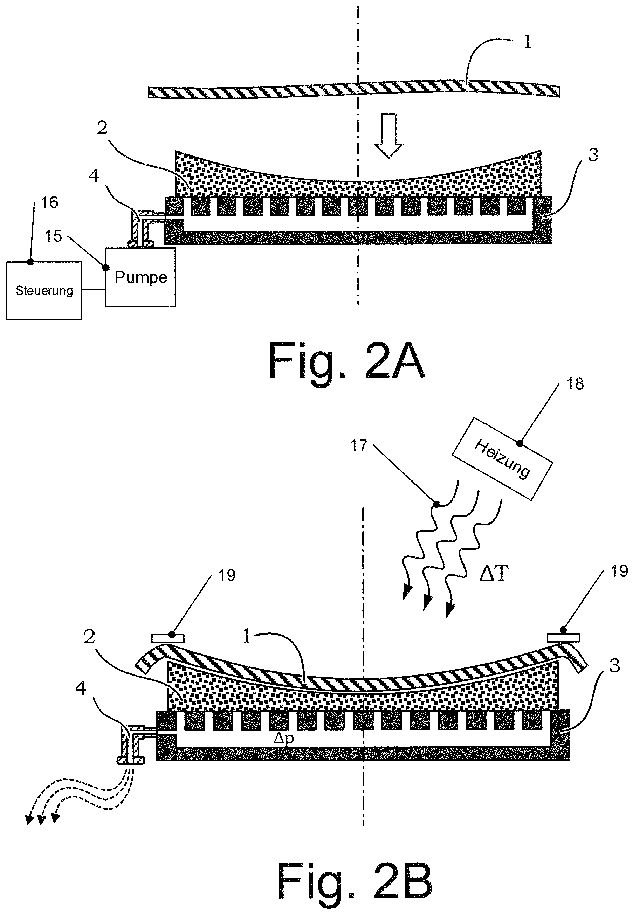

Zur Durchführung des Verfahrens wird eine Vorrichtung gemäß einem Ausführungsbeispiel verwendet. Die Verwendung einer derartigen Vorrichtung zur Durchführung des Verfahrens der Fig. 1 sowie die Vorrichtung selbst werden unter Bezugnahme auf die Fig. 2A bis 2F erläutert.

In Schritt 100 des Verfahrens wird eine Folie auf einer Luftlageranordnung einer Vorrichtung gemäß einem Ausführungsbeispiel platziert. Dies ist in Fig. 2A dargestellt. Die Fig. 2A zeigt dabei eine Querschnittsansicht einer Folie 1, die auf der erfindungsgemäßen Vorrichtung angeordnet wird. Die Luftlageranordnung der Vorrichtung umfasst dabei ein Luftlager 3, welches ein Gehäuse umfasst, auf dessen einer Seite Luftein-/auslässe angeordnet sind, und eine darauf angeordnete poröse Schicht 2 aus einem porösen Material. Das poröse Material kann beispielsweise porösen Graphit, eine poröse Sinterkeramik und/oder Sintermessing umfassen. Mit einem derartigen porösen Material kann eine sehr hohe Dichte von Luftauslässen/-einlässen auf einer Oberfläche der porösen Schicht 2, die dem Luftlager 3 abgewandt ist, erreicht werden. Die Folie 1 kann dabei insbesondere über einen Rand der Schicht 2 gespannt werden.

Die dem Luftlager 3 abgewandte Oberfläche der porösen Schicht 2 (im Folgenden einfach als Oberfläche der Schicht 2 bezeichnet) weist eine Oberflächenform auf, welche zu einer Oberflächenform eines Trägers, auf dem die Folie 1 angebracht werden soll, komplementär ist, also ein Negativ der Oberflächenform des Trägers darstellt. Dies wird aus späteren Figuren noch näher ersichtlich. Die Oberflächenform der Schicht 2 kann mit einer Ultrapräzisionsbearbeitung erzeugt werden, wodurch Formabweichungen von nur wenigen Mikrometren erzielt werden (z. B. Formabweichungen kleiner 100 µm, kleiner 50 µm oder kleiner 10 µm). Dies kann einen Dreh-, Fräs- oder Schleifprozess umfassen, oder auch andere Fertigungsverfahren wie eine Laserbearbeitung.

Wenn die Schicht 2 eine optische Funktion aufweisen soll (z. B. Reflexion bei einer Belichtung, wie dies später in Fig. 5 gezeigt wird), kann die Schicht 2 je nach verwendetem Material poliert werden.

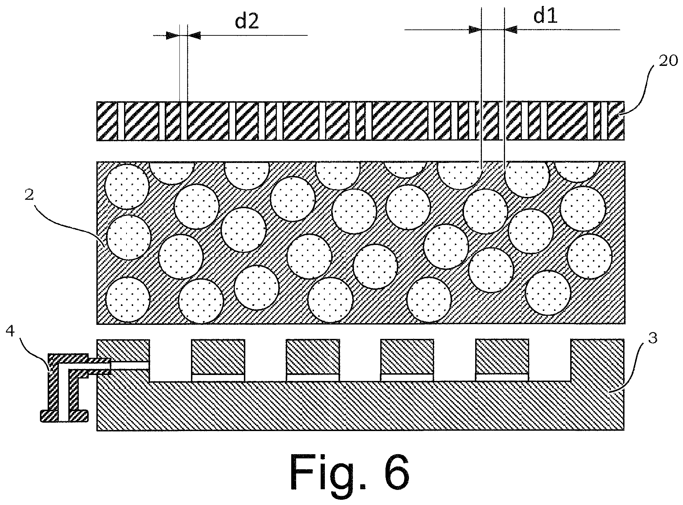

Die Oberfläche der Schicht 2 kann bei manchen Ausführungsbeispielen eine zusätzliche Beschichtung aufweisen, welche je nach Ausführung bestimmte Funktionen erfüllt. Ein entsprechendes Ausführungsbeispiel ist in Fig. 6 dargestellt, bei der eine Beschichtung 20 auf derjenigen Oberfläche der porösen Schicht 2 angeordnet ist, auf die die Folie 1 platziert wird.

Beispielsweise kann eine derartige Beschichtung den Luftstrom durch die Schicht 2 drosseln oder dem Eindringen von Flüssigkeiten entgegenwirken, z. B. im Fall einer hydrophoben Beschichtung. Auch eine Vergütung der Oberfläche der Schicht 2 ist durch eine derartige Beschichtung möglich.

Auch eine mikro- bzw. nanostrukturierte Beschichtung kann verwendet werden, um Düsenquerschnitte im Submikrometerbereich zu erhalten und Unebenheiten der porösen Schicht 2 zu minimieren oder die Eigenschaften der porösen Schicht 2 auf andere Weise zu modifizieren. Als Beispiel weist die Schicht 20 der Fig. 6 Öffnungen mit einem Durchmesser d2 auf, welcher kleiner ist als ein mittlerer Durchmesser d1 von Poren in der Oberfläche der Schicht 2. Beispielsweise kann d1 etwa 13 µm betragen, während d1 etwa 1 µm betragen kann.

Um eine derartige Schicht herzustellen, kann die Schicht 20 beispielsweise als Siliziumschicht auf die Schicht 2 aufgebracht werden und dann mit herkömmlichen Lithografieverfahren strukturiert werden. So kann ein Fotolack auf die Schicht 20 aufbracht werden und entsprechend den zu erzeugenden Öffnungen belichtet und entwickelt werden, gefolgt von einem Ätzen des Siliziums und Entfernen des restlichen Fotolacks.

Das Luftlager 3 weist einen Luftein-/auslass 4 auf, der mit einer Pumpe 15 verbunden ist. Die Pumpe 15 ist bei dem Ausführungsbeispiel der Fig. 2A eine Saugpumpe, welche einen Unterdruck in dem Luftlager 3 erzeugen kann und somit Luft durch Poren der Schicht 2 ansaugen kann. Die Pumpe 15 kann umkehrbar sein, d.h. bei manchen Ausführungsbeispielen auch als Druckpumpe arbeiten. Bei wieder anderen Ausführungsbeispielen kann auch nur eine Druckpumpe bereitgestellt sein. Die Pumpe 15 wird durch eine Steuerung 16 gesteuert.

In Schritt 101 wird die Folie dann an die Luftlageranordnung angesaugt, indem das Luftlager 3 mit Unterdruck beaufschlagt wird, und in Schritt 102 wird optional eine Wärmebehandlung der Folie durchgeführt. Dies ist in Fig. 2B dargestellt. Für das Ansaugen der Folie 1 wird mittels der Pumpe 15 ein Unterdruck Δp in dem Luftlager 3 erzeugt, wodurch die Folie 1 an die Oberfläche der Schicht 2 angesaugt wird. Optional kann eine Halterung, wie ein Ring 19 der Fig. 2B, die Folie dabei an den Rändern der Schicht 2 fixieren. Je nach Folie kann die Oberfläche der Schicht 2 in gewissen Grenzen, die durch das Material und die Anpassungsfähigkeit der Folie vorgegeben ist, mehrdimensional gekrümmt sein, beispielsweise in einer sphärischen Form, einer rotationssymmetrischen, asphärischen Form oder einer Freiform. Grundsätzlich ist auch eine plane Form möglich, wobei die Vorteile der Verwendung der Luftlageranordnung insbesondere bei gekrümmten Formen zum Tragen kommen. Zu bemerken ist, dass Krümmungen der Schicht 2 positiv oder negativ, d.h. konkav oder konvex, sein können, sich also verschiedenen Formen des Trägers anpassen können. Konkave Krümmungsradien können dabei im Bereich von 60 mm und darüber sein, sind jedoch nicht hierauf beschränkt.

Der Unterdruck beim Ansaugen der Folie kann abhängig vom Krümmungsradius der Oberfläche der Schicht 2 und/oder der Steifigkeit der Folie 1 gewählt werden.

Durch eine Wärmebehandlung können Spannungen in der Folie 1 dabei verringert werden und die Anpassung der Folie 1 an die Form der Oberfläche der Schicht 2, falls nötig, verbessert werden. Hierzu kann eine Heizung 18, beispielsweise eine Infrarotlampe oder eine Anordnung aus mehreren Infrarotlampen, bereitgestellt sein, welche Wärmestrahlung 17 auf die Folie 1 abgibt. Auch andere Arten von Heizungen, beispielsweise Heißluftgebläse, können je nach Art der Folie 1 verwendet werden. Eine derartige Wärmezufuhr ist insbesondere bei kleineren Krümmungsradien der Oberfläche der Schicht 2 vorteilhaft, wenn es sonst zu größeren Spannungen in der Folie 1 beim Ansaugen kommen könnte.

Bei manchen Ausführungsbeispielen kann die Anpassung der Form der Folie 1 dabei schrittweise über mehrere Luftlageranordnungen mit zunehmend starker Krümmung erfolgen, wobei dann in diesem Fall die Oberfläche der Schicht 2 der letzten verwendeten Luftlageranordnung an die Form des Trägers angepasst ist. Zur Formgebung der Folie ist dabei kein Einspannen zwischen zwei Werkzeughälften nötig.

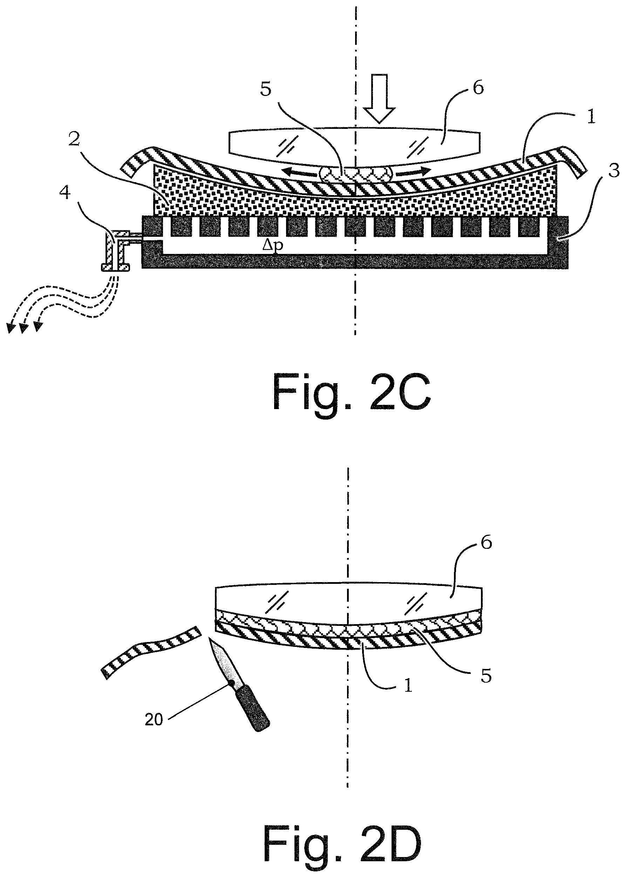

In Schritt 103 wird dann ein Träger auf der Folie befestigt. Dies ist in Fig. 2C dargestellt.

In dem Beispiel der Fig. 2C wird eine optische Linse 6 als Beispiel für einen transparenten Träger verwendet. Bei anderen Ausführungsbeispielen können auch andere Träger, insbesondere andere transparente Träger, verwendet werden, beispielsweise gekrümmte Scheiben für Head-up-Displays (HUD), Fahrzeugscheiben, Fahrzeugarmaturen, Anzeigen (Displays) und dergleichen. Je nach Anwendung können auch nicht-transparente Träger, z. B. für Armaturen in einem Kraftfahrzeug, oder reflektierende Träger, beispielsweise in Form eines Parabolspiegels, verwendet werden. Die Linse 6 kann verschiedenen Zwecken dienen, beispielsweise als Brillenglas oder als Linse in einer anderen optischen Vorrichtung.

Um die Folie 1 an der Linse 6 zu befestigen, wird ein Klebemittel, beispielsweise ein optischer Kitt, auf die Folie 1 gegeben und dann die Linse 6 auf die Folie 1 gedrückt. Bevorzugt weist das Klebemittel 5 eine an die Folie 1 angepasste Brechzahl auf, sodass Unebenheiten der Folie 1 hier noch kompensiert werden können. Nach dem Aushärten oder Abbinden des Klebemittels 5 ist dann die Folie 1 an der Linse 6 befestigt. Wie zu sehen ist, ist die Oberfläche der Schicht 2 zu derjenigen Oberfläche der Linse 6 komplementär, an der die Folie 1 zu befestigen ist, sodass die Folie 1 die korrekte Form zum Anbringen auf der Linse 6 aufweist.

Durch die Porosität der Schicht 2 kann die Folie 1 insbesondere ohne Lufteinschlüsse geformt werden. Durch Anbringen der Folie auf dem Träger, beispielsweise der Linse 6, in dem Zustand, in dem sie durch die Luftlageranordnung angesaugt und in Form gehalten wird, bleibt die Form nach dem Lösen (und Aushärten des Klebemittels 5) erhalten.

Als Nächstes wird in Schritt 104 der Träger mit der darin angebrachten Folie von der Luftlageranordnung entfernt. Dies kann automatisiert mittels eines Greifarms oder manuell erfolgen. Bei manchen Ausführungsbeispielen kann dieses Entfernen dadurch unterstützt werden, dass die Pumpe 15 als Druckpumpe arbeitet, sodass ein Überdruck erzeugt wird, welcher das Entfernen des Trägers mit der daran angebrachten Folie von der Luftlageranordnung erleichtern kann.

Falls nötig, kann dann in Schritt 105 überschüssige Folie entfernt werden. Die Fig. 2D zeigt zur Veranschaulichung die von der Luftlageranordnung entfernte Linse 6 mit der mittels des Klebemittels 5 darauf angebrachten Folie 1. Es ist darauf hinzuweisen, dass die Durchmesser von Folie und Klebemittel nicht als maßstäblich anzusehen sind. Insbesondere kann die Schicht des Klebemittels 5 einen geringeren Durchmesser aufweisen als die Folie 1. Überschüssige Folie, d.h. Folie, die über den Rand der Linse 6 übersteht, kann mittels eines geeigneten Schneidwerkzeugs 20 entfernt werden. Dies kann ebenfalls automatisiert erfolgen.

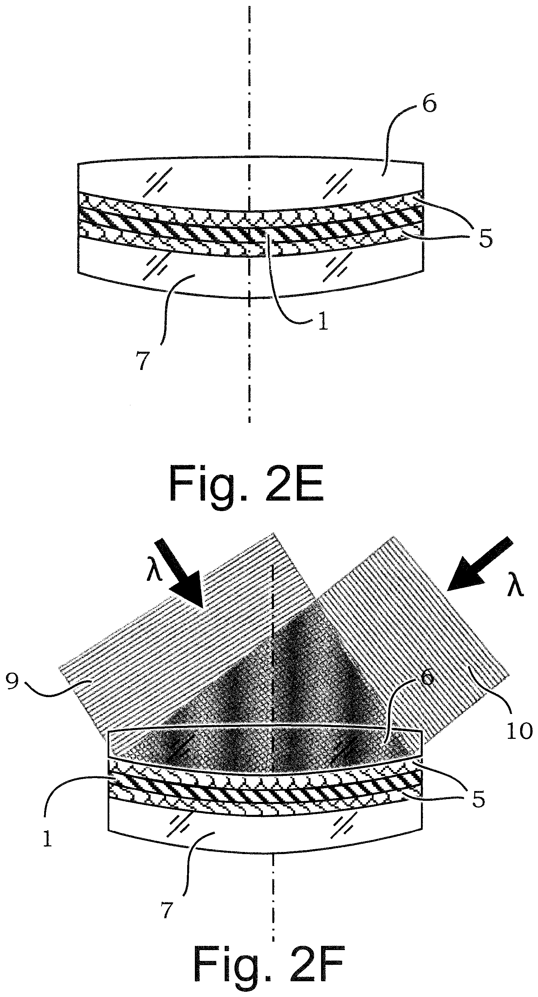

Wenn die Folie in eine Komponente, beispielsweise in eine optische Komponente, eingebettet sein soll, kann in Schritt 106 der Fig. 1 ein weiterer Träger auf der Folie befestigt werden. Ein Beispiel ist in der Fig. 2E gezeigt, wo eine weitere Linse 7 als ein Beispiel für einen weiteren Träger auf der Folie 1 befestigt wird, wobei wiederum ein geeignetes Klebemittel 5, insbesondere das gleiche Klebemittel wie in Schritt 103, verwendet werden kann. Auf diese Weise kann eine optische Komponente hergestellt werden, in welche die Folie 1 eingebettet ist.

Die Folie 1 ist eine Folie aus einem fotosensitiven Material zur Herstellung eines Hologramms. Die Folie wird dann in Schritt 107 belichtet, um Gitterstrukturen oder andere holographische Strukturen in die Folie zu schreiben. Dies ist in Fig. 2F veranschaulicht. Hier wird die Folie 1 mit zwei Wellenfronten 9, 10 belichtet, um durch Interferenz ein entsprechendes Gitter in der Folie 1, beispielsweise ein Volumenhologramm, zu erzeugen. Eine der Wellenfronten 9, 10 kann einem Objektlicht und die andere der Wellenfronten 9, 10 einem Referenzlicht bei der Herstellung des Hologramms entsprechen. Statt einer derartigen Belichtung können auch andere Arten der Bearbeitung je nach Material der Folie 1 durchgeführt werden, beispielsweise ein Gravieren oder ein Laserschreiben.

Eine optische Komponente, welche mit dem oben beschriebenen Verfahren gefertigt werden kann, ist in Fig. 3 dargestellt. Diese besteht aus den bereits beschriebenen Linsen 6, 7 mit der darin eingebetteten Folie 1, in die eine holographische Struktur geschrieben wurde. Hierdurch kann eine Vorrichtung mit einem refraktiven Fokus 11, welcher durch Brechung an den Linsen 6, 7 entsteht, und einem diffraktiven Fokus 12, welcher sich aus den Eigenschaften des Hologramms ergibt, hergestellt werden. Dies ist jedoch nur ein Beispiel für eine mit Ausführungsbeispielen herstellbare optische Komponente.

Neben Folien, d.h. dünnen, biegsamen Substraten, können mit Abwandlungen des beschriebenen Verfahrens auch andere Materialien auf einem Träger angebracht werden. Ein Beispiel hierfür ist in den Fig. 4A und 4B dargestellt. Statt einer Folie wird hier ein flüssiges Material 8 auf einem Träger, hier wiederum als Beispiel die Linse 6, aufgebracht. Beispiele für derartiges Material umfassen Photopolymere oder OCA (Optically Clear Adhesive), welche in flüssiger Form vorliegen. Eine Menge dieses Materials wird auf die poröse Schicht 2 gegeben. Dabei wird der Luftein-/auslass mit einem Verschluss 13 verschlossen, gegebenenfalls nachdem das Luftlager 3 auf einen leichten Überdruck gesetzt wurde. Dies kann ein Eindringen des flüssigen Materials 8 in die Poren der Schicht 2 verhindern oder zumindest verringern. Wenn dann die Linse 6 auf die Schicht 2 gedrückt wird, verteilt sich das flüssige Material 8 und haftet an der Linse 6.

Ist das Material 8 dann ausgehärtet, was bei manchen Ausführungsbeispielen durch eine Wärmezufuhr mit einer Heizung, wie in Fig. 2B gezeigt, beschleunigt werden kann, wird entsprechend dem Schritt 104 der Träger mit dem Material 8 von der Luftlageranordnung entfernt. Hier wird, wie in Fig. 4B gezeigt, bevorzugt dem Luftlager 3 Luft zugeführt, um einen Überdruck zu erzeugen und somit die Linse 6 mit dem Material 8 einfach ablösen zu können. Die weitere Verarbeitung kann wie bei einer Folie vorgenommen werden, d.h. es kann gegebenenfalls ein weiterer Träger, beispielsweise die weitere Linse 7, auf einem Material 8 befestigt werden, und/oder es kann eine Belichtung oder andere Verarbeitung des Materials 8 erfolgen.

Bei den obigen Ausführungsbeispielen erfolgt die Bearbeitung, insbesondere Belichtung, des Materials (zum Beispiel der Folie), nachdem der Träger mit dem Material von der Luftlageranordnung entfernt wurde. Eine Bearbeitung, wie eine Belichtung, ist jedoch auch zu einem anderen Zeitpunkt des Herstellungsprozesses möglich. Als Beispiel zeigt die Fig. 5 eine Belichtung der Folie 1 mit den Wellenfronten 9, 10, nachdem die Folie 1 durch die Luftlageranordnung an die Schicht 2 angesaugt wurde, d.h. im Anschluss an den Schritt 101 oder 102 der Fig. 1. Hierzu kann wie erwähnt die Oberfläche der porösen Schicht 2 reflektierende Eigenschaften aufweisen, beispielsweise durch eine entsprechende Beschichtung oder eine Bearbeitung wie einem Polieren. Anschließend kann dann wie beschrieben ein Träger mittels eines Klebemittels angebracht werden. Auch hier sind wiederum andere Bearbeitungen als Belichten möglich.

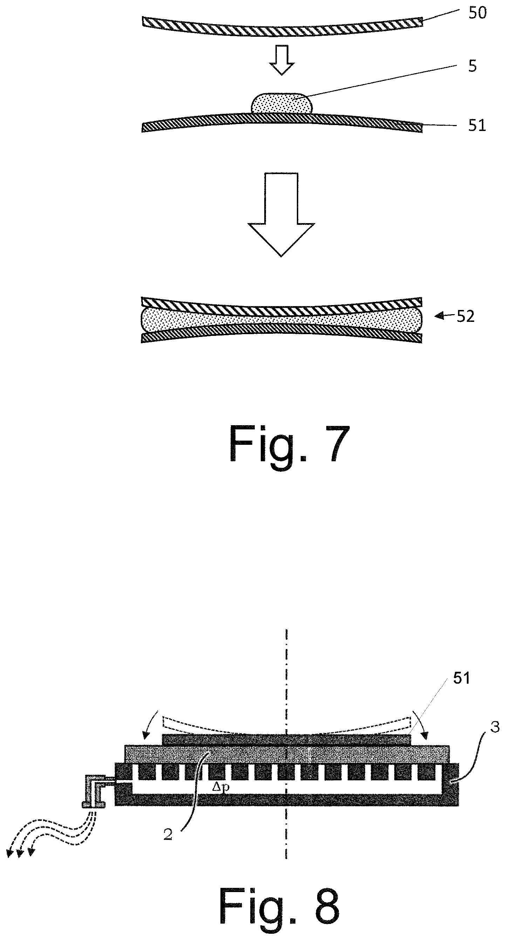

Bei den obigen Ausführungsbeispielen wurde ein auf einen Träger aufzubringendes Material mittels eines Luftlagers 2, 3 in Form gebracht und dann - beispielsweise mit dem Klebemittel 5 - auf einem Träger befestigt. Bei anderen Ausführungsbeispielen kann der Träger zusätzlich mit einem weiteren Luftlager in Form gebracht werden. Zusätzlich oder alternativ können das Material und der Träger letztendlich aus dem gleichen Material bestehen. Ein gemeinsames Ausführungsbeispiel für diese beiden Abwandlungen, welche aber auch unabhängig voneinander implementiert werden können, wird nunmehr unter Bezugnahme auf die Fig. 7 bis 10 erläutert.

Aufgabenstellung ist bei diesem Beispiel, zwei Platten, insbesondere zwei transparente Platten, wie Glasplatten, miteinander zu verkleben. Zur Veranschaulichung der Problematik zeigt die Fig. 7 eine erste Glasplatte 50 und eine zweite Glasplatte 51, die mittels eines Klebemittels 5 zu verkleben sind. Die Glasplatten 50, 51 sind dabei im Vergleich zu Ihrer Dicke relativ großflächig. Beispielsweise kann die Dicke im Bereich von unter 1 mm (z. B. Folien oder Schutzgläser) bis 10 mm Substratstärke liegen, und eine Fläche mit Kantenlängen im Bereich 50 bis 1000 mm. Auch größere Dimensionen (z. B. Fenstergläser, Windschutzscheiben) sind möglich. Außer Glasplatten können auch andere derartige Plansubstrate verwendet werden, z. B. Folien und dergleichen. Derartige Glasplatten 50, 51 weisen wie dargestellt normalerweise Verkrümmungen auf. Werden die Glasplatten 50, 51 ohne weitere Maßnahmen miteinander verklebt, ergibt sich eine Baugruppe 52, die als Ganzes nicht planparallel ist. Wird die Baugruppe 52 beispielsweise für Wellenleiteranwendungen oder Strahlaufweitungsanwendungen verwendet, können dadurch Abbildungsfehler entstehen. Bei einem senkrechten Lichtdurchtritt weist die Baugruppe 52 eine Brennweite auf und kann dabei eine unerwünschte abbildende Funktion haben.

Eine Lösung gemäß einem Ausführungsbeispiel besteht darin, beide Substrate 50, 51 mit entsprechenden Luftlageranordnungen in eine gewünschte Form, beispielsweise eine plane Form, zu bringen und dann zu verkleben. Dies wird unter Bezugnahme auf die Fig. 8 bis 10 erläutert.

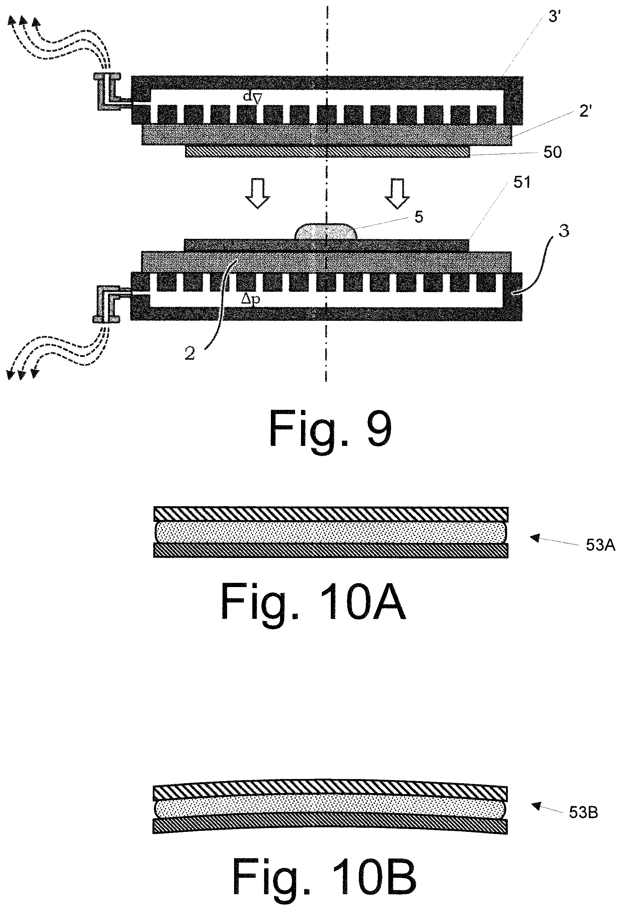

In der Fig. 8 wird die zweite Glasplatte auf einer Luftlageranordnung 2, 3 durch Unterdruck in eine plane Form gebracht, wie für die Materialien, beispielsweise die Folie 1, für die vorherigen Ausführungsbeispiele beschrieben. Die Luftlageranordnung 2, 3 kann wie oben beschrieben ausgestaltet sein, die obigen Abwandlungen und Details können auch hier angewendet werden. Zudem wird, wie in Fig. 9 dargestellt, die erste Glasplatte 50 mittels einer weiteren Luftlageranordnung 2', 3' ebenfalls in eine gewünschte Form, hier eine plane Form gebracht.

Die hier verwendete weitere Luftlageranordnung 2', 3' kann wie die bereits beschriebene Luftlageranordnung 2, 3 ausgestaltet sein. Sie kann mit dieser eine Pumpe (z. B. die bereits beschriebene Pumpe 15) teilen oder eine eigene Pumpe aufweisen.

Die beiden Luftlageranordnungen 2, 3 und 2', 3' werden dann zusammengebracht und die Glasplatten 50, 51 mittels des Klebemittels 5 miteinander verklebt. Danach können optional die Luftlager 2,3 bzw. 2', 3' mit Überdruck beaufschlagt werden, um die Glasplatten 50, 51 von den Luftlagern zu lösen.

Wie in Fig. 10A gezeigt resultiert hier eine Baugruppe 53A mit konstanter Dicke, welche für optische Anwendungen besser geeignet sein kann als die Baugruppe 52 der Fig. 7. Falls eine Verkrümmung auftritt, ist dies in solchen Fällen dann eine gemeinsame Krümmung beider Gruppen wie in einer Baugruppe 53B der Fig. 10B gezeigt, was bei vielen Anwendungen weniger problematisch ist als eine variable Dicke wie bei der Baugruppe 52 der Fig. 7. Zu bemerken ist, dass eine gekrümmte Baugruppe wie in Fig. 10B gezeigt auch absichtlich hergestellt werden kann, indem die Luftlageranordnungen, insbesondere die porösen Schichten 2, 2', eine entsprechende Form aufweisen.

Hier kann gleichsam die erste Glasplatte 50 als Träger und die zweite Glasplatte 51 als auf den Träger aufzubringendes Material angesehen werden (oder umgekehrt). Zu bemerken ist, dass in dem Beispiel zwei gleichartige Elemente (die Glasplatten 50, 51) miteinander verklebt werden, die Vorgehensweise der Fig. 8 bis 10 kann jedoch auch verwendet werden, verschiedenartige Elemente miteinander zu koppeln, beispielsweise eine großflächige Folie auf eine großflächige Glasplatte aufzubringen.

Bei den dargestellten Verfahren und Vorrichtungen entspricht dabei die Genauigkeit der Formung des Materials und/oder des Trägers mittels der Luftlageranordnungen im Wesentlichen der Genauigkeit der Oberflächen der jeweiligen porösen Materialien 2, 2'. Diese Genauigkeit kann wie erläutert im Mikrometerbereich liegen.

## Patentansprüche

1. Verfahren zum Anbringen eines fotosensitiven Materials (1, 8) auf einem Träger (6; 50), umfassend:
Platzieren des fotosensitiven Materials (1, 8) auf einer Oberfläche einer porösen Schicht (2) einer Luftlageranordnung (2, 3), wobei die Oberfläche der porösen Schicht (2) komplementär zu einer Oberfläche des Trägers (6; 50), auf der das fotosensitive Material (1, 8) anzubringen ist, ausgestaltet ist, und
Anordnen des Trägers (6; 50 ) auf dem auf der Oberfläche der porösen Schicht (2) angeordneten fotosensitiven Material (1, 8),
wobei das Verfahren weiter umfasst:
Beaufschlagen der Luftlageranordnung (2, 3) mit Unterdruck zum Ansaugen des Materials (1, 8), bevor der Träger (6; 50) auf dem fotosensitiven Material (1, 8) angeordnet wird, und/oder
Beaufschlagen der Luftlageranordnung (2, 3) mit Überdruck zum Lösen des Trägers (6) mit dem daran angebrachten fotosensitiven Material (1, 8) von der Luftlageranordnung (2, 3), und
Belichten des fotosensitiven Materials (1,8) zur Herstellung einer holographischen Struktur und/oder Gitterstruktur.

2. Verfahren nach Anspruch 1, wobei das fotosensitive Material (1) eine Folie umfasst, und wobei das Verfahren zudem ein Aufbringen eines Klebemittels (5) auf die Folie (1) vor dem Anordnen des Trägers (6) auf dem fotosensitiven Material (1) umfasst.

3. Verfahren nach Anspruch 1, wobei das fotosensitive Material (8) ein flüssiges Material umfasst.

4. Verfahren nach Anspruch 3, wobei das Verfahren ein Verschließen eines Luftanschlusses (4) der Luftlageranordnung (2, 3) bei dem Platzieren des fotosensitiven Materials (8) auf der Oberfläche der porösen Schicht (2) und beim Anordnen des Trägers (6) umfasst.

5. Verfahren nach einem der Ansprüche 1 bis 4, wobei das Verfahren weiter eine Wärmebehandlung des auf der Oberfläche der porösen Schicht (2) platzierten fotosensitiven Materials (1, 8) umfasst.

6. Verfahren nach einem der Ansprüche 1 bis 5, wobei sich das fotosensitive Material (1, 8) während des Belichtens auf der Oberfläche der porösen Schicht (2) befindet.

7. Verfahren nach einem der Ansprüche 1 bis 5, wobei das fotosensitive Material (1, 8) während des Belichtens mit dem Träger (6) verbunden ist und von der porösen Schicht (2) entfernt ist.

8. Verfahren nach einem der Ansprüche 1 bis 7, weiter umfassend ein Anbringen eines weiteren Trägers (7) auf dem fotosensitiven Material (1, 8) auf einer dem Träger (6) abgewandten Seite.

9. Verfahren nach einem der Ansprüche 1 bis 8, wobei der Träger (6; 50) ein transparenter Träger ist.

10. Verfahren nach einem der Ansprüche 1 bis 9 wobei das Verfahren zum Herstellen einer optischen Komponente (53A, 53B) dient.

11. Verfahren nach einem der Ansprüche 1 bis 10, wobei der Träger (50) eine Glasplatte umfasst.

12. Verfahren nach einem der Ansprüche 1 bis 11, weiter umfassend:
Platzieren des Trägers (50) auf einer Oberfläche einer weiteren porösen Schicht (2') einer weiteren Luftlageranordnung (2', 3'), wobei die Oberfläche der weiteren porösen Schicht (2') entsprechend einer gewünschten Oberfläche des Trägers (50), auf der das fotosensitive Material (1, 8) anzubringen ist, ausgestaltet ist, und
Beaufschlagen der weiteren Luftlageranordnung (2', 3') mit Unterdruck zum Ansaugen des Trägers (50), bevor der Träger (50) auf dem fotosensitiven Material (1, 8) angeordnet wird.

13. Vorrichtung zum Befestigen eines fotosensitiven Materials (1, 8) auf einem Träger (6; 50), umfassend:
eine Luftlageranordnung (2, 3) mit einer auf einem Luftlager (3) angeordneten porösen Schicht (2), wobei die poröse Schicht (2) eine Oberfläche zum Aufnehmen des fotosensitiven Materials (1, 8) aufweist, und
eine Pumpe (15) zum Beaufschlagen des Luftlagers (3) mit Überdruck und/oder Unterdruck,
wobei die Vorrichtung weiter zum Belichten des fotosensitiven Materials (1,8) zur Herstellung einer holographischen Struktur und/oder Gitterstruktur eingerichtet ist.

14. Vorrichtung nach Anspruch 13, wobei die Oberfläche der porösen Schicht (2) eine gekrümmte Form aufweist.

15. Vorrichtung nach Anspruch 13 oder 14, wobei die Oberfläche der porösen Schicht (2) eine Beschichtung (20) aufweist, wobei bevorzugt die Beschichtung Öffnungen mit einem Durchmesser aufweist, der kleiner ist als ein mittlerer Durchmesser von Poren in der Oberfläche der porösen Schicht (2).

16. Vorrichtung nach einem der Ansprüche 13 bis 15, weiter umfassend:
eine weitere Luftlageranordnung (2', 3') mit einer auf einem weiteren Luftlager (3') angeordneten weiteren porösen Schicht (2'), wobei die weitere poröse Schicht (2') eine Oberfläche zum Aufnehmen des Trägers (50) aufweist.

17. Vorrichtung nach einem der Ansprüche 13 bis 16, wobei die Vorrichtung zur Durchführung des Verfahrens nach einem der Ansprüche 1 bis 12 eingerichtet ist.

## Claims

1. Method for mounting a photosensitive material (1, 8) on a carrier (6; 50), comprising:
placing the photosensitive material (1, 8) on a surface of a porous layer (2) of an air bearing arrangement (2, 3), wherein the surface of the porous layer (2) is designed to be complementary to a surface of the carrier (6; 50) on which the photosensitive material (1, 8) is to be mounted, and
arranging the carrier (6; 50) on the photosensitive material (1, 8) arranged on the surface of the porous layer (2),
wherein the method further comprises:
applying negative pressure to the air bearing arrangement (2, 3) in order to suction the material (1, 8), before the carrier (6; 50) is arranged on the photosensitive material (1, 8), and/or
applying positive pressure to the air bearing arrangement (2, 3) in order to release the carrier (6) with the photosensitive material (1, 8) mounted thereon from the air bearing arrangement (2, 3), and
exposing the photosensitive material (1, 8) in order to produce a holographic structure and/or grating structure.

2. Method according to Claim 1, wherein the photosensitive material (1) comprises a film, and wherein the method also comprises applying an adhesive (5) to the film (1) before the carrier (6) is arranged on the photosensitive material (1).

3. Method according to Claim 1, wherein the photosensitive material (8) comprises a liquid material.

4. Method according to Claim 3, wherein the method comprises closing an air connection (4) of the air bearing arrangement (2, 3) when placing the photosensitive material (8) on the surface of the porous layer (2) and when arranging the carrier (6).

5. Method according to one of Claims 1 to 4, wherein the method further comprises a heat treatment of the photosensitive material (1, 8) placed on the surface of the porous layer (2).

6. Method according to one of Claims 1 to 5, wherein the photosensitive material (1, 8) is located on the surface of the porous layer (2) during the exposure.

7. Method according to one of Claims 1 to 5, wherein, during the exposure, the photosensitive material (1, 8) is connected to the carrier (6) and is removed from the porous layer (2).

8. Method according to one of Claims 1 to 7, further comprising mounting a further carrier (7) on the photosensitive material (1, 8) on a side facing away from the carrier (6).

9. Method according to one of Claims 1 to 8, wherein the carrier (6; 50) is a transparent carrier.

10. Method according to one of Claims 1 to 9, wherein the method is used to produce an optical component (53A, 53B) .

11. Method according to one of Claims 1 to 10, wherein the carrier (50) comprises a glass plate.

12. Method according to one of Claims 1 to 11, further comprising:
placing the carrier (50) on a surface of a further porous layer (2') of a further air bearing arrangement (2', 3'), wherein the surface of the further porous layer (2') is designed to correspond to a desired surface of the carrier (50) on which the photosensitive material (1, 8) is to be mounted, and
applying negative pressure to the further air bearing arrangement (2', 3') in order to suction the carrier (50), before the carrier (50) is arranged on the photosensitive material (1, 8).

13. Apparatus for fastening a photosensitive material (1, 8) to a carrier (6; 50), comprising:
an air bearing arrangement (2, 3) having a porous layer (2) arranged on an air bearing (3), wherein the porous layer (2) has a surface for receiving the photosensitive material (1, 8), and
a pump (15) for applying positive pressure and/or negative pressure to the air bearing (3),
wherein the apparatus is further set up to expose the photosensitive material (1, 8) in order to produce a holographic structure and/or grating structure.

14. Apparatus according to Claim 13, wherein the surface of the porous layer (2) has a curved shape.

15. Apparatus according to Claim 13 or 14, wherein the surface of the porous layer (2) has a coating (20), wherein preferably the coating has openings with a diameter which is smaller than an average diameter of pores in the surface of the porous layer (2).

16. Apparatus according to one of Claims 13 to 15, further comprising:
a further air bearing arrangement (2', 3') having a further porous layer (2') arranged on a further air bearing (3'), wherein the further porous layer (2') has a surface for receiving the carrier (50).

17. Apparatus according to one of Claims 13 to 16, wherein the apparatus is set up to carry out the method according to one of Claims 1 to 12.

## Revendications

1. Procédé d'application d'un matériau photosensible (1, 8) sur un support (6 ; 50), comprenant :
le dépôt du matériau photosensible (1, 8) sur une surface d'une couche poreuse (2) d'un agencement palier pneumatique (2, 3), la surface de la couche poreuse (2) étant conçue de manière complémentaire à une surface du support (6 ; 50) sur lequel le matériau photosensible (1, 8) doit être appliqué, et
l'agencement du support (6 ; 50) sur le matériau photosensible (1, 8) agencé sur la surface de la couche poreuse (2),
le procédé comprenant en outre :
la sollicitation de l'agencement palier pneumatique (2, 3) par une dépression pour l'aspiration du matériau (1, 8) avant l'agencement du support (6 ; 50) sur le matériau photosensible (1, 8) et/ou
la sollicitation de l'agencement palier pneumatique (2, 3) par une surpression pour le détachement du support (6), présentant le matériau photosensible (1, 8) qui y est appliqué, de l'agencement palier pneumatique (2, 3) et
l'illumination du matériau photosensible (1,8) pour la réalisation d'une structure holographique et/ou d'une structure de réseau.

2. Procédé selon la revendication 1, le matériau photosensible (1) comprenant une feuille et le procédé comprenant en outre une application d'un adhésif (5) sur la feuille (1) avant l'agencement du support (6) sur le matériau photosensible (1).

3. Procédé selon la revendication 1, le matériau photosensible (8) comprenant un matériau liquide.

4. Procédé selon la revendication 3, le procédé comprenant une fermeture d'un raccord pneumatique (4) de l'agencement de palier pneumatique (2, 3) lors du dépôt du matériau photosensible (8) sur la surface de la couche poreuse (2) et lors de l'agencement du support (6).

5. Procédé selon l'une des revendications 1 à 4, le procédé comprenant en outre un traitement thermique du matériau photosensible (1, 8) déposé sur la surface de la couche poreuse (2).

6. Procédé selon l'une des revendications 1 à 5, le matériau photosensible (1, 8) se trouvant sur la surface de la couche poreuse (2) pendant l'illumination.

7. Procédé selon l'une des revendications 1 à 5, le matériau photosensible (1, 8), pendant l'illumination, étant relié au support (6) et retiré de la couche poreuse (2) .

8. Procédé selon l'une des revendications 1 à 7, comprenant en outre une application d'un autre support (7) sur le matériau photosensible (1, 8) sur un côté opposé au support (6).

9. Procédé selon l'une des revendications 1 à 8, le support (6 ; 50) étant un support transparent.

10. Procédé selon l'une des revendications 1 à 9, le procédé servant à la fabrication d'un composant optique (53A, 53B) .

11. Procédé selon l'une des revendications 1 à 10, le support (50) comprenant une plaque de verre.

12. Procédé selon l'une des revendications 1 à 11, comprenant en outre :
le dépôt du support (50) sur une surface d'une autre couche poreuse (2') d'un autre agencement palier pneumatique (2', 3'), la surface de l'autre couche poreuse (2') étant conçue de manière correspondante à une surface souhaitée du support (50), sur lequel le matériau photosensible (1, 8) doit être appliqué, et
la sollicitation de l'autre agencement palier pneumatique (2', 3') par une dépression pour l'aspiration du support (50), avant l'agencement du support (50) sur le matériau photosensible (1, 8).

13. Dispositif pour la fixation d'un matériau photosensible (1, 8) sur un support (6 ; 50), comprenant :
un agencement palier pneumatique (2, 3) présentant une couche poreuse (2) agencée sur un palier pneumatique (3), la couche poreuse (2) présentant une surface destinée à recevoir le matériau photosensible (1, 8) et
une pompe (15) pour la sollicitation du palier pneumatique (3) par une surpression et/ou une dépression, le dispositif étant en outre conçu pour l'illumination du matériau photosensible (1, 8) pour la fabrication d'une structure holographique et/ou d'une structure de réseau.

14. Dispositif selon la revendication 13, la surface de la couche poreuse (2) présentant une forme incurvée.

15. Dispositif selon la revendication 13 ou 14, la surface de la couche poreuse (2) présentant un revêtement (20), le revêtement présentant de préférence des ouvertures d'un diamètre qui est inférieur à un diamètre moyen de pores dans la surface de la couche poreuse (2).

16. Dispositif selon l'une des revendications 13 à 15, comprenant en outre :
un autre agencement palier pneumatique (2', 3') présentant une autre couche poreuse (2') agencée sur un autre palier pneumatique (3'), l'autre couche poreuse (2') présentant une surface destinée à recevoir le support (50).

17. Dispositif selon l'une des revendications 13 à 16, le dispositif étant conçu pour la mise en œuvre le procédé selon l'une des revendications 1 à 12.
